# EUROPÄISCHE PATENTSCHRIFT

(11) **EP 3 767 748 B1**
(45) Veröffentlichungstag und Bekanntmachung des Hinweises auf die Patenterteilung: **10.01.2024**
(21) Anmeldenummer: 20183887.7
(22) Anmeldetag: 03.07.2020
(51) Int. Cl.: H01Q 7/06, H01Q 1/22, H01Q 1/32, G06K 19/077

(54) **IDENTIFIKATIONSMITTEL FUER EINE SCHLIESSANLAGE**
IDENTIFICATION MEANS FOR LOCKING SYSTEM
MOYENS D`IDENTIFICATION DU SYSTEME DE FERMETURE

(30) Priorität: 17.07.2019 DE 102019210543
(43) Veröffentlichungstag der Anmeldung: 20.01.2021
(73) Patentinhaber: Aug. Winkhaus GmbH & Co. KG, 48291 Telgte (DE)
(72) Erfinder: Bickert, Peter, 48291 Telgte (DE); Ostermann, Jens, 48317 Drensteinfurt (DE); Pape, Peter, 59192 Bergkamen (DE)

(56) Entgegenhaltungen:
- EP-A1- 3 089 176
- EP-A2- 1 944 827
- WO-A1-2017/159436
- JP-A- 2009 130 446
- US-A1- 2007 279 300
- US-A1- 2017 214 139

## Beschreibung

Die Erfindung betrifft ein Identifikationsmittel für eine Schließanlage mit einem Transponder und mit einer Antenne, wobei die Antenne einen Kern und eine um den Kern angeordnete Spule aufweist, wobei der Kern der Antenne mehrere sandwichartig übereinander liegende dielektrische Schichten mit einer hohen Permeabilität aufweist und die Schichten untereinander elektrisch isoliert sind und wobei der Kern der Antenne und der Transponder zu einer baulichen Einheit als Transponderelement gestaltet sind.

Ein tragbarer Datenträger mit funkbasierter Datenkommunikationseinrichtung ist aus der WO 2011/091830 A1 bekannt. Hierbei ist eine Antennenspule mit einem Kern innerhalb eines Trägersubstrats angeordnet. Zwei Abschirmstrukturen sind auf den Außenseiten des Trägersubstrates angeordnet. Der Datenträger ist jedoch mit der um den Kern gewickelten Antennenspule sehr aufwändig zu montieren.

Ein Etikett mit einem RFID Chip ist beispielsweise aus der WO 2017/159436 A1 bekannt. Bei diesem Etikett ist eine Platine über eine Dichtungsschicht von einem magnetischen Körper abgeschirmt. Eine Antennenspule ist um den magnetischen Körper und die Platine gewickelt. Die Antenne verfügt jedoch nur über eine sehr geringe Leistung.

Die EP 1 944 827 A2 offenbart eine Antenne, welche für ein RFID-Tag- Lese-/Schreibgerät verwendet werden kann. Ein IC kann hierzu mit der Antenne über Platinenverdrahtungen und Platinenanschlussklemmen verbunden werden.

Die US 2007/279300 A1 offenbart eine Antennenanordnung zum Abstrahlen eines langwelligen Aufwecksignals. Eine solche Antennenanordnung lässt sich im Inneren eines Kraftfahrzeugtürgriffs einsetzen.

Die US 2017/214139 A1 offenbart ein Antennenmodul mit magnetischen Isolationsschichten und nichtmagnetischen Isolationsschichten. Die magnetischen Isolationsschichten enthalten magnetisches Ferrit.

Die WO 2017/159436 A1 offenbart ein RFID Tag mit einer Leiterplatte. Eine Spule ist um die Leiterplatte geführt.

Die CN 105 229 852 A offenbart eine auf einer Folie aufgedruckte Spulenanordnung.

Die JP 2009-130446A offenbart einen Funksender und -empfänger mit einer Spule und einer Platte aus magnetischem Material. Weiterhin sind zwei Metallplatten parallel zu einer Richtung eines magnetischen Flusses auf beiden Seiten der Spule angeordnet. Hierdurch soll die Verschiebung einer Resonanzfrequenz vermieden werden.

Der Erfindung liegt das Problem zugrunde, ein Identifikationsmittel der eingangs genannten Art so weiter zu bilden, dass es besonders kostengünstig herstellbar ist sowie gleichzeitig eine hohe Gegeninduktivität und somit gute Kopplungseigenschaften hat.

Dieses Problem wird erfindungsgemäß dadurch gelöst, dass die dielektrische Schicht eine Isolationsschicht, eine Klebstoffschicht und eine zwischen der Isolationsschicht und der Klebstoffschicht angeordnete Ferritschicht hat.

Durch diese Gestaltung lässt sich zunächst eine einfach zu handhabende Baugruppe mit den wesentlichen Bauteilen herstellen. Da der Kern der Antenne mehrere voneinander isolierte dielektrische Schichten aufweist, werden unter anderem unerwünschte Effekte wie Wirbelstromverluste zuverlässig vermieden wodurch die Antenne eine hohe Antennenleistung aufweist. Durch den schichtartigen Aufbau lässt sich das Identifikationsmittel besonders kostengünstig herstellen. Weiterhin sorgt der schichtartige Aufbau bei gegebener Dicke des Kerns für eine hohe mechanische Flexibilität und dadurch für eine hohe mechanische Widerstandsfähigkeit gegenüber Schock-oder Torsionsbelastungen. Das Identifikationsmittel gestaltet sich besonders kostengünstig, weil die dielektrische Schicht eine Isolationsschicht, eine Klebstoffschicht und eine zwischen der Isolationsschicht und der Klebstoffschicht angeordnete Ferritschicht hat. Durch diese Gestaltung besteht die dielektrische Schicht aus mehreren Teilschichten. Die sandwichartig übereinander liegenden dielektrischen Schichten weisen hierdurch jeweils eine eigene Isolation auf.

Zur weiteren Verringerung der Fertigungskosten des Identifikationsmittels trägt es gemäß einer anderen vorteilhaften Weiterbildung der Erfindung bei, wenn die Schicht mit der hohen Permeabilität als Klebefolie ausgebildet ist. Solche Klebefolien lassen sich einfach zuschneiden oder Ausstanzen und sandwichartig übereinander kleben.

Das Identifikationsmittel hat gemäß einer vorteilhaften Weiterbildung eine besonders hohe Stabilität, wenn eine Leiterbahnen aufweisende Platine parallel auf den Schichten angeordnet und Teil der baulichen Einheit als Transponderelement ist. Durch diese Gestaltung wird vermieden, dass die elektrischen Bauteile und Leiterbahnen unmittelbar auf den Schichten aufgebracht werden müssen. Dadurch können die Spulendrähte in einfacher Weise abgelegt und der Transponderchip direkt kontaktiert werden. Hierdurch wird eine preisgünstige Fertigung ermöglicht.

Das Identifikationsmittel gestaltet sich gemäß einer anderen vorteilhaften Weiterbildung der Erfindung besonders kompakt, wenn die Spule der Antenne um das Transponderelement gewickelt ist. Durch die direkte Verbindung der Spule der Antenne und dem Transponderelement werden zusätzliche Leitungselemente sowie eine durch diese hervorgerufene Verstimmung der Resonanzfrequenz vermieden.

Ein mechanischer Halt der Spule auf dem Transponderelement lässt sich gemäß einer anderen vorteilhaften Weiterbildung der Erfindung einfach sicherstellen, wenn das Transponderelement eine Ausnehmung zur Aufnahme der Spule hat.

Hervorstehende Bauteile lassen sich gemäß einer anderen vorteilhaften Weiterbildung der Erfindung vermeiden, wenn die Ausnehmung eine der Höhe der Spule entsprechende Tiefe hat.

Eine mechanische Stabilisierung der Schichten durch die Platine lässt sich gemäß einer anderen vorteilhaften Weiterbildung der Erfindung einfach erreichen, wenn die Platine und die Schichten des Kerns den gleichen Umriss haben.

Zur weiteren Vereinfachung des konstruktiven Aufbaus des Identifikationsmittels trägt es gemäß einer anderen vorteilhaften Weiterbildung der Erfindung bei, wenn der Transponder auf einer ersten Seite der Platine und die Schichten auf der anderen Seite der Platine angeordnet sind.

Zur Verbesserung der Abstrahleigenschaften der Antenne trägt es gemäß einer anderen vorteilhaften Weiterbildung der Erfindung bei, wenn die Platine auf der Seite des Transponders zumindest eine weitere dielektrische Schicht hat. Die weitere dielektrische Schicht kann eine mittige Ausnehmung für den Transponder aufweisen.

Zur weiteren Verringerung der Fertigungskosten trägt es gemäß einer anderen vorteilhaften Weiterbildung der Erfindung bei, wenn die Isolationsschicht den Kunststoff PET aufweist. Durch eine so ausgebildete Isolationsschicht werden weiterhin die elastischen Eigenschaften der dielektrischen Schicht und somit auch des gesamten Schichtsystems verbessert.

Eine für Identifikationsmittel ausreichende Abstrahlcharakteristik der Antenne lässt sich gemäß einer anderen vorteilhaften Weiterbildung der Erfindung erreichen, wenn die Ferritschicht die Stärke von 0,05 bis 0,45 mm hat. Die Kunststoffschicht und die Klebstoffschicht weisen vorzugsweise eine Stärke von 0,03 bis 0,05 mm auf.

Das Identifikationsmittel lässt sich gemäß einer anderen vorteilhaften Weiterbildung der Erfindung als Schlüssel für einen elektronischen Schließzylinder der Schließanlage gestalten, wenn das Identifikationsmittel ein Kunststoffgehäuse mit einem Schacht aufweist und dass das Transponderelement in den Schacht eingeschoben und in diesem stoffschlüssig oder formschlüssig befestigt ist.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig.1: ein Identifikationsmittel mit einem schlüsselförmigen Kunststoffgehäuse vor der Montage,
- Fig.2: ein Transponderelement des Identifikationsmittels aus Figur 1 in einer vergrößerten Darstellung,
- Fig.3: ein stark vergrößerter Teilbereich III des Transponderelementes aus Figur 2,
- Fig.4-8: weitere Ausführungsformen des Transponderelementes.

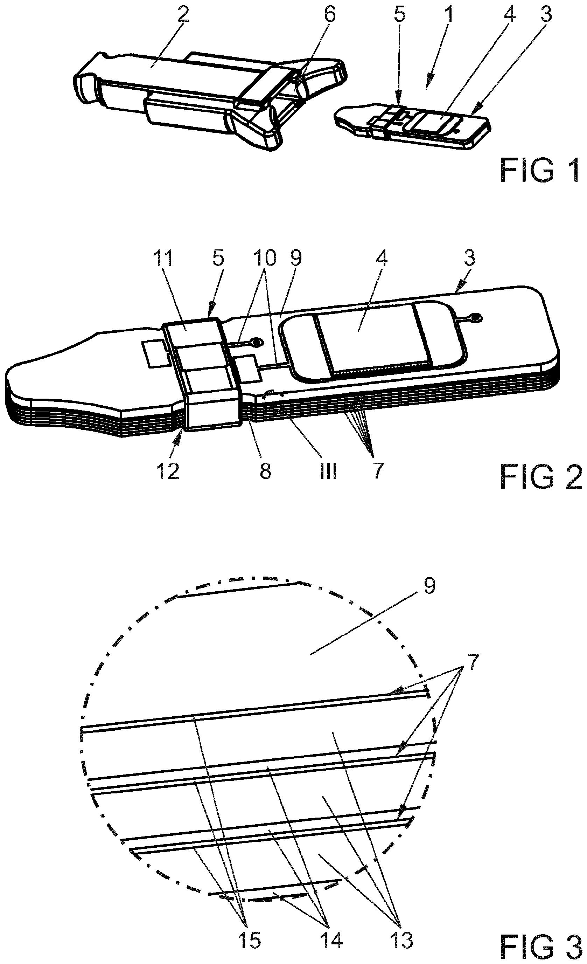

Figur 1 zeigt ein Identifikationsmittel 1 für eine nicht dargestellte Schließanlage mit einem schlüsselförmigen Kunststoffgehäuse 2 vor der Montage. Das Identifikationsmittel 1 hat ein Transponderelement 3 mit einem Transponder 4 und mit einer Antenne 5. Das Kunststoffgehäuse 2 hat einen Schacht 6 zur Aufnahme des Transponderelementes 3 und ist schlüsselförmig gestaltet. Das Transponderelement 3 lässt sich zur Montage in den Schacht 6 einführen und darin durch eine Vergussmasse befestigen oder formschlüssig fixieren. Damit wird ein elektronischer Schlüssel für einen Schließzylinder geschaffen.

In einer nicht dargestellten Ausführungsform kann das Transponderelement 3 auch in einer Karte, einem Schlüsselanhänger oder dergleichen integriert werden, um entsprechende Schließanlagen anzusteuern.

Figur 2 zeigt das Transponderelement 3 aus Figur 1 in einer vergrößerten Darstellung. Das Transponderelement 3 hat mehrere sandwichartig übereinander liegende dielektrische Schichten 7 mit einer hohen Permeabilität. Diese Schichten 7 bilden einen Kern 8 der Antenne 5. Auf den Schichten 7 ist eine Platine 9 angeordnet. Die Platine 9 weist den Transponder 4 und mehrere Leiterbahnen 10 auf. Der Transponder 4 ist als Chip auf der Platine 9 befestigt. Die Platine 9 kann zudem weitere nicht dargestellte elektrische Bauteile aufweisen. Eine Spule 11 der Antenne 5 ist um die Platine 9 und die Schichten 7 gewickelt. Hierzu hat das Transponderelement 3 eine als Einschnürung ausgebildete Ausnehmung 12.

Figur 3 zeigt zur Verdeutlichung stark vergrößert eine Einzelheit III des Transponderelementes 3 aus Figur 2. Hierbei ist zu erkennen, dass die Schichten 7 aus mehreren Teilschichten bestehen. Eine mittlere Teilschicht wird von einer dielektrischen Ferritschicht 13 gebildet. Zu einer Seite hat die Ferritschicht 13 eine Isolationsschicht 14 aus dem Kunststoff PET und zur anderen Seite eine Klebstoffschicht 15.

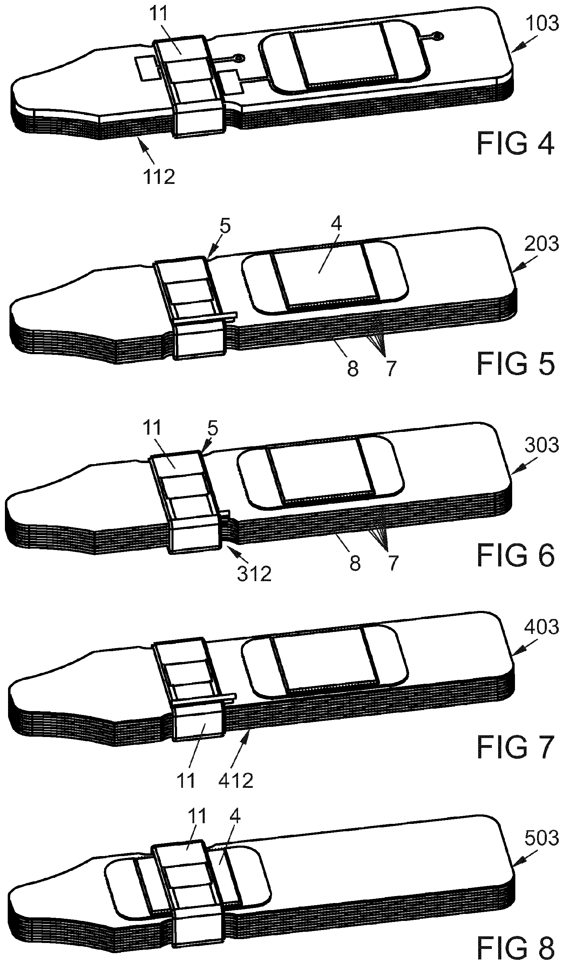

Figur 4 zeigt ein Transponderelement 103, welches sich von dem aus Figur 2 nur dadurch unterscheidet, dass eine Ausnehmung 112 bis zu einem spitzen Ende des Transponderelementes 103 geführt ist. Hierdurch lässt sich die Spule 11 separat wickeln und auf das Transponderelement 103 aufschieben.

Figur 5 zeigt ein Transponderelement 203, welches sich von dem aus Figur 2 dadurch unterscheidet, dass der Transponder 4 unmittelbar auf den Schichten 7 des Kerns 8 der Antenne 5 angeordnet ist. Eine Platine wie bei der Ausführungsform nach Figur 2 ist hier nicht erforderlich.

Figur 6 zeigt ein Transponderelement 303, welches sich von dem aus Figur 4 dadurch unterscheidet, dass der Transponder auf den Schichten 7 des Kerns 8 der Antenne 5 befestigt ist. Eine Ausnehmung 312 zur Aufnahme der Spule 11 ist bis zum spitzen Ende des Transponderelementes geführt.

Figur 7 zeigt ein Transponderelement 403, welches sich von dem aus Figur 6 nur dadurch unterscheidet, dass eine Ausnehmung 412 zur Aufnahme der Spule 11 bis zu einem stumpfen Ende des Transponderelementes 403 geführt ist.

Figur 8 zeigt ein Transponderelement 503, welches sich von dem aus Figur 5 dadurch unterscheidet, dass der Transponder 4 unterhalb der Spule 11 der Antenne 5 angeordnet ist.

## Patentansprüche

1. Identifikationsmittel (1) für eine Schließanlage mit einem Transponder (4) und mit einer Antenne (5), wobei die Antenne (5) einen Kern (8) und eine um den Kern (8) angeordnete Spule (11) aufweist, wobei der Kern (8) der Antenne (5) mehrere sandwichartig übereinander liegende dielektrische Schichten (7) mit einer hohen Permeabilität aufweist und die Schichten (7) untereinander elektrisch isoliert sind und wobei der Kern (8) der Antenne (5) und der Transponder (4) zu einer baulichen Einheit als Transponderelement (3, 103, 203, 303, 403, 503) gestaltet sind, **dadurch gekennzeichnet, dass** die dielektrische Schicht (7) eine Isolationsschicht (14), eine Klebstoffschicht (15) und eine zwischen der Isolationsschicht (14) und der Klebstoffschicht (15) angeordnete Ferritschicht (13) hat.

2. Identifikationsmittel nach Anspruch 1, **dadurch gekennzeichnet, dass** die Schicht (7) mit der hohen Permeabilität als Klebefolie ausgebildet ist.

3. Identifikationsmittel nach Anspruch 1 oder 2, **dadurch gekennzeichnet, dass** eine Leiterbahnen (10) aufweisende Platine (9) parallel auf den Schichten (7) angeordnet und Teil der baulichen Einheit als Transponderelement (3, 103) ist.

4. Identifikationsmittel nach zumindest einem der vorhergehenden Ansprüche, **dadurch gekennzeichnet, dass** die Spule (11) der Antenne (5) um das Transponderelement (3, 103, 203, 303, 403, 503) gewickelt ist.

5. Identifikationsmittel nach zumindest einem der vorhergehenden Ansprüche, **dadurch gekennzeichnet, dass** das Transponderelement (3, 103, 203, 303, 403, 503) eine Ausnehmung (12, 112, 212, 312, 412, 512) zur Aufnahme der Spule (11) hat.

6. Identifikationsmittel nach Anspruch 5, **dadurch gekennzeichnet, dass** die Ausnehmung (12, 112, 212, 312, 412, 512) eine der Höhe der Spule (11) entsprechende Tiefe hat.

7. Identifikationsmittel nach zumindest einem der Ansprüche 3 bis 6, **dadurch gekennzeichnet, dass** die Platine (9) und die Schichten (7) des Kerns (8) den gleichen Umriss haben.

8. Identifikationsmittel nach zumindest einem der Ansprüche 3 bis 7, **dadurch gekennzeichnet, dass** der Transponder (4) auf einer ersten Seite der Platine (9) und die Schichten (7) auf der anderen Seite der Platine (9) angeordnet sind.

9. Identifikationsmittel nach zumindest einem der Ansprüche 3 bis 8, **dadurch gekennzeichnet, dass** die Platine (9) auf der Seite des Transponders (4) zumindest eine weitere dielektrische Schicht (7) hat.

10. Identifikationsmittel nach Anspruch 9, **dadurch gekennzeichnet, dass** die Isolationsschicht (14) den Kunststoff PET aufweist.

11. Identifikationsmittel nach Anspruch 9 oder 10, **dadurch gekennzeichnet, dass** die Ferritschicht (13) die Stärke von 0,05 bis 0,45 mm hat.

12. Identifikationsmittel nach zumindest einem der vorhergehenden Ansprüche, **dadurch gekennzeichnet, dass** das Identifikationsmittel (1) ein Kunststoffgehäuse (2) mit einem Schacht (6) aufweist und dass das Transponderelement (3, 103, 203, 303, 403, 503) in den Schacht (6) eingeschoben und in diesem stoffschlüssig oder formschlüssig befestigt ist.

## Claims

1. Identification means (1) for a locking system having a transponder (4) and an antenna (5), the antenna (5) having a core (8) and a coil (11) wrapped around the core (8), the core (8) of the antenna (5) having a plurality of dielectric layers (7) which lie one above the other in a sandwich-like manner and have high permeability, the layers (7) being electrically insulated from one another, and the core (8) of the antenna (5) and the transponder (4) being designed to form a structural unit as a transponder element (3, 103, 203, 303, 403, 503), **characterized in that** the dielectric layer (7) has an insulation layer (14), an adhesive layer (15) and a ferrite layer (13) arranged between the insulation layer (14) and the adhesive layer (15).

2. Identification means according to claim 1, **characterized in that** the layer (7) with high permeability is designed as an adhesive film.

3. Identification means according to claim 1 or 2, **characterized in that** a printed circuit board (9) having conductor paths (10) is arranged in parallel on the layers (7) and is part of the structural unit as a transponder element (3, 103).

4. Identification means according to at least one of the preceding claims, **characterized in that** the coil (11) of the antenna (5) is wound around the transponder element (3, 103, 203, 303, 403, 503).

5. Identification means according to at least one of the preceding claims, **characterized in that** the transponder element (3, 103, 203, 303, 403, 503) has a recess (12, 112, 212, 312, 412, 512) for receiving the coil (11).

6. Identification means according to claim 5, **characterized in that** the recess (12, 112, 212, 312, 412, 512) has a depth which corresponds to the height of the coil (11).

7. Identification means according to at least one of claims 3 to 6, **characterized in that** the printed circuit board (9) and the layers (7) of the core (8) have the same outline.

8. Identification means according to at least one of claims 3 to 7, **characterized in that** the transponder (4) is arranged on a first side of the printed circuit board (9) and the layers (7) are arranged on the other side of the printed circuit board (9).

9. Identification means according to at least one of claims 3 to 8, **characterized in that** the printed circuit board (9) has at least one further dielectric layer (7) on the side of the transponder (4).

10. Identification means according to claim 9, **characterized in that** the insulation layer (14) comprises the plastics material PET.

11. Identification means according to claim 9 or 10, **characterized in that** the ferrite layer (13) has a thickness of 0.05 to 0.45 mm.

12. Identification means according to at least one of the preceding claims, **characterized in that** the identification means (1) has a plastics housing (2) having a shaft (6), and **in that** the transponder element (3, 103, 203, 303, 403, 503) is inserted into the shaft (6) and fastened therein in a firmly bonded or formfitting manner.

## Revendications

1. Moyen d'identification (1) pour une installation de fermeture, comportant un transpondeur (4) et comportant une antenne (5), dans lequel l'antenne (5) présente un noyau (8) et une bobine (11) disposée autour du noyau (8), dans lequel le noyau (8) de l'antenne (5) présente plusieurs couches (7) diélectriques à haute perméabilité superposées en sandwich et les couches (7) sont isolées électriquement les unes des autres, et dans lequel le noyau (8) de l'antenne (5) et le transpondeur (4) sont conçus pour former une unité structurale en tant qu'élément transpondeur (3, 103, 203, 303, 403, 503), **caractérisé en ce que** la couche (7) diélectrique a une couche isolante (14), une couche adhésive (15) et une couche de ferrite (13) disposée entre la couche isolante (14) et la couche adhésive (15).

2. Moyen d'identification selon la revendication 1, **caractérisé en ce que** la couche (7) à haute perméabilité est réalisée sous forme de feuille adhésive.

3. Moyen d'identification selon la revendication 1 ou 2,
**caractérisé en ce qu'**une carte de circuit imprimé (9) présentant des pistes conductrices (10) est disposée parallèlement sur les couches (7) et fait partie de l'unité structurale en tant qu'élément transpondeur (3, 103).

4. Moyen d'identification selon au moins l'une des revendications précédentes, **caractérisé en ce que** la bobine (11) de l'antenne (5) est enroulée autour de l'élément transpondeur (3, 103, 203, 303, 403, 503).

5. Moyen d'identification selon au moins l'une des revendications précédentes, **caractérisé en ce que** l'élément transpondeur (3, 103, 203, 303, 403, 503) a un évidement (12, 112, 212, 312, 412, 512) pour la réception de la bobine (11).

6. Moyen d'identification selon la revendication 5, **caractérisé en ce que** l'évidement (12, 112, 212, 312, 412, 512) a une profondeur correspondant à la hauteur de la bobine (11).

7. Moyen d'identification selon au moins l'une des revendications 3 à 6, **caractérisé en ce que** la carte de circuit imprimé (9) et les couches (7) du noyau (8) ont le même contour.

8. Moyen d'identification selon au moins l'une des revendications 3 à 7, **caractérisé en ce que** le transpondeur (4) est disposé sur un premier côté de la carte de circuit imprimé (9) et les couches (7) sont disposées sur l'autre côté de la carte de circuit imprimé (9).

9. Moyen d'identification selon au moins l'une des revendications 3 à 8, **caractérisé en ce que** la carte de circuit imprimé (9) a, sur le côté du transpondeur (4), au moins une autre couche (7) diélectrique.

10. Moyen d'identification selon la revendication 9, **caractérisé en ce que** la couche isolante (14) présente la matière plastique PET.

11. Moyen d'identification selon la revendication 9 ou 10,
**caractérisé en ce que** la couche de ferrite (13) a une épaisseur de 0,05 à 0,45 mm.

12. Moyen d'identification selon au moins l'une des revendications précédentes, **caractérisé en ce que** le moyen d'identification (1) présente un boîtier en matière plastique (2) comportant une cavité (6) **et en ce que** l'élément transpondeur (3, 103, 203, 303, 403, 503) est inséré dans la cavité (6) et est fixé dans celle-ci par liaison de matière ou par complémentarité de forme.
